(19) Europäisches Patentamt
European Patent Office
Office européen des brevets

(11) **EP 2 302 087 B1**

(12) **EUROPÄISCHE PATENTSCHRIFT**

(45) Veröffentlichungstag und Bekanntmachung des Hinweises auf die Patenterteilung:
**25.07.2012  Patentblatt 2012/30**

(51) Int Cl.:
*C22C 21/06* (2006.01)       *B22D 7/02* (2006.01)
*B22D 11/00* (2006.01)       *B23K 20/233* (2006.01)
*B32B 15/01* (2006.01)

(21) Anmeldenummer: **09170295.1**

(22) Anmeldetag: **15.09.2009**

(54) **Fahrwerkteil aus AL-Verbundwerkstoff**

Undercarriage section made of AL compound material

Pièces de roulement en matière active composite AL

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**30.03.2011  Patentblatt 2011/13**

(73) Patentinhaber: **Hydro Aluminium Deutschland GmbH**
**51149 Köln (DE)**

(72) Erfinder:
• **Brinkman, Henk-Jan**
  **53175 Bonn (DE)**
• **Engler, Olaf**
  **53229 Bonn (DE)**
• **Schröder, Dietmar**
  **41515 Grevenbroich (DE)**
• **Wirtz, Thomas**
  **22175 Hamburg (DE)**
• **Kehl, Werner**
  **21635 Jork (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
FR-A1- 2 877 877      JP-A- 6 228 690
JP-A- 6 228 691

**Beschreibung**

Die Erfindung betrifft die Verwendung eines Aluminiumverbundwerkstoffs für ein Fahrwerkteil eines Fahrzeugs, insbesondere eines Kraftfahrzeugs, wobei der Aluminiumverbundwerkstoff eine Aluminiumkernlegierungsschicht mit mindestens einer ein- oder beidseitigen äußere Aluminiumlegierungsschicht aufweist. Daneben betrifft die vorliegende Erfindung auch ein Verfahren zur Herstellung des Aluminiumverbundwerkstoffs für Fahrwerkteile.

Hochfeste Aluminiumlegierungen, unter anderem Aluminiumlegierungen mit Magnesiumanteilen von mehr als 3,5 Gew.-% bis 7 Gew.-% werden im Kraftfahrzeugbau, bei der Herstellung von Luftfahrzeugen, im Schiffsbau oder bei der Herstellung von Schienenfahrzeugen verwendet. Sie zeichnen sich durch besonders hohe Festigkeiten aus und können daher vor allem zur Gewichtsreduktion von Bauteilen, die großen Kräften oder Belastungen ausgesetzt sind, beitragen. Problematisch bei diesen hochfesten hochmagnesiumhaltigen Aluminiumlegierungen ist nun, dass diese nach dauerhaftem Wärmeeinfluss zur interkristallinen Korrosion neigen. Interkristalline Korrosion führt zu Kerbwirkungen in belasteten Bauteilen. Damit besteht beim Auftreten interkristalliner Korrosion unter Last prinzipiell eine Bruchgefahr für diese Bauteile. Dies gilt vor allem für Bauteile des Fahrwerks eines Fahrzeugs, beispielsweise eines Kraftfahrzeugs oder Schienenfahrzeugs. Zum Fahrwerk eines Fahrzeuges gehören insbesondere Radaufhängung, Federung, Lenkung und Bremsen. Darunter fallen auch Achsbauteile, wie beispielsweise Achsrahmen und Achsschemel. Diese Bauteile sind hohen statischen und dynamischen Kräften ausgesetzt. Ferner werden sie auch zum Teil in Bereichen, in welchen über längere Zeit erhöhte Umgebungstemperaturen vorliegen, angeordnet, beispielsweise im Bereich des Motorraums oder der Abgasanlage. Darüber hinaus weisen Fahrwerkteile häufiger auch eine Schweißnaht auf. Eine Schweißnaht sowie die zugehörige Wärmeeinflusszone bieten weitere Angriffspunkte für die Entstehung von interkristalliner Korrosion. Um die Korrosionsproblematik zu entschärfen, ist beispielsweise aus der deutschen Offenlegungsschrift DE 198 38 017 A1 bekannt, Mangan und Scandium in einem bestimmten Verhältnis der Aluminiumlegierung zuzulegieren, so dass die Korrosionsbeständigkeit der daraus hergestellten Bauteile verbessert wird. Das Zulegieren von Scandium ist jedoch im Hinblick auf die Recyclingfähigkeit der verwendeten Aluminiumwerkstoffe problematisch. Scandium stellt darüber hinaus einen sehr kostspieligen Legierungsbestandteil dar. Für Karosseriebleche ist aus der EP 1 852 251 A1 bekannt, einen Aluminiumverbundwerkstoff mit einer ein- oder beidseitigen äußeren Aluminiumlegierungsschicht zu verwenden. Allerdings werden Karosseriebleche nicht verschweißt, sondern aus Fertigungs- und Korrosionsschutzgründen üblicherweise geklebt.

JP 6 228 691 A offenbart einen Aluminiumverbundwerkstoff mit ähnlicher Zusammensetzung wie die vorliegenden Erfindung.

Hiervon ausgehend liegt der vorliegenden Erfindung die Aufgabe zugrunde, die Verwendung eines Aluminiumverbundwerkstoffs für ein Fahrwerkteil für den Fahrzeugbau, insbesondere Kraftfahrzeugbau vorzuschlagen, welcher hervorragende statische und dynamische Festigkeitswerte mit einer hohen Umformbarkeit und einer hohen Beständigkeit gegenüber interkristalliner Korrosion kombiniert.

Gemäß einer ersten Lehre der vorliegenden Erfindung wird die oben aufgezeigte Aufgabe dadurch gelöst, dass die Aluminiumkernlegierungsschicht die folgenden Legierungsbestandteile in Gewichtsprozent aufweist:

| 3,5 % | < | Mg | ≤ 7,0 %, |
|-------|---|----|----------|
|       |   | Mn | ≤ 1,0 %, |
|       |   | Fe | ≤ 0,5 %, |
|       |   | Si | ≤ 0,4 %, |
|       |   | Cu | ≤ 0,15 %, |
|       |   | Cr | ≤ 0,25 %, |
|       |   | Zn | ≤ 0,25 %, |
|       |   | Ti | ≤ 0,2 %, |

Rest Al mit Verunreinigungen einzeln maximal 0,05 % in Summe maximal 0,15 % und die mindestens eine äußere Aluminiumlegierungsschicht aus Aluminium oder einer Aluminiumlegierung besteht, deren Massenverlust bei einem Korrosionstest gemäß ASTM G67 maximal 15 mg/cm$^2$, vorzugsweise weniger als 5 mg/cm$^2$ beträgt.

Der Aluminiumverbundwerkstoff stellt eine sehr hohe dynamische und statische Festigkeit zur Verfügung, welche bei der Verwendung für Fahrwerkteile benötigt wird, um weitere Gewichtseinsparungen zu ermöglichen. Dies wird durch die Aluminiumkernlegierungsschicht geleistet, deren Magnesiumgehalt von mehr als 3,5 Gew.-% bis 7,0 Gew.-% sehr hohe statische Festigkeiten aufweist. Die Begrenzung des Mangangehaltes auf maximal 1,0 Gew.-%, des Eisengehaltes auf maximal 0,5 Gew.-% sowie des Siliziumgehaltes auf maximal 0,4 Gew.-% gewährleistet, dass aufgrund der hohen Magnesium-Gehalte keine groben Ausscheidungen im Herstellprozess gebildet werden. Kupfer kann bis maximal 0,15 Gew.-% zulegiert werden, um einerseits die Festigkeit der Aluminiumkernlegierung zu erhöhen, ohne die weiteren Eigenschaften, insbesondere die Korrosionsbeständigkeit der Aluminiumkernlegierung zu verschlechtern. Ferner kann die Aluminiumkernlegierung bis zu 0,25 Gew.-% Chrom enthalten, um die Korrosionsbeständigkeit der Kernlegierung zu verbessern. Zusätzlich trägt ein entsprechender Chromgehalt zu kleinen Korngrößen bei. Eine gute Schweißbarkeit wird dadurch erreicht, dass der Zink-Gehalt maximal 0,25 Gew.-% beträgt. Darüber hinaus trägt ein Titangehalt von maximal 0,2 Gew.-

% zur Kornfeinung bei. Die vorliegenden feinen Gefügephasen stellen die gewünschten dynamischen Festigkeiten für die Verwendung als Fahrwerkteil sicher. Ferner wirken sich grobe Ausscheidungen auch negativ auf das Umformverhalten der Aluminiumkernlegierungsschicht aus, so dass das für die Herstellung von komplex geformten Fahrwerkteilen benötigte gute Umformverhalten des Aluminiumverbundwerkstoffs ebenfalls zur Verfügung gestellt wird. Die Beständigkeit dieser Aluminiumkernlegierungsschicht gegenüber interkristalliner Korrosion wird durch die mindestens eine äußere Aluminiumlegierungsschicht gewährleistet, welche aus Aluminium oder einer Aluminiumlegierung besteht, deren Massenverlust in einem Korrosionstest nach ASTM G67 maximal 15 mg/cm$^2$ bzw. weniger als 5 mg/cm$^2$ beträgt. Je geringer der Massenverlust der äußeren Aluminium- oder Aluminiumlegierungsschicht, desto beständiger ist der Aluminiumverbundwerkstoff gegenüber interkristalliner Korrosion. Es hat sich gezeigt, dass durch eine äußere Aluminium- oder Aluminiumlegierungsschicht, die im Korrosionstest so geringe Massenverluste erleidet, die Beständigkeit von mit dem Aluminiumverbundwerkstoff hergestellten Fahrwerkteilen gegenüber interkristalliner Korrosion ausreichend groß wird, so dass diese auch in Umgebungsbereichen mit dauerhaft erhöhter Temperatur, beispielsweise im Motorraum oder im Bereich der Abgasanlage, eingesetzt werden können. Darüber hinaus hat sich herausgestellt, dass bei der erfindungsgemäßen Verwendung des Aluminiumverbundwerkstoffs auch geschweißte Fahrwerkteile im Hinblick auf interkristalline Korrosion unproblematisch sind.

Vorzugsweise weist die mindestens eine äußere Aluminium- oder Aluminiumlegierungsschicht die folgenden Legierungskomponenten in Gewichtsprozent auf:

0,5 % ≤ Mg ≤ 1,1 %,
Mn ≤ 0,5 %,
Fe ≤ 0,5 %,
Si ≤ 0,3 %,
Cu ≤ 0,2 %,
Cr ≤ 0,15 %,
Zn ≤ 0,25 %,
Ti ≤ 0,2 %,

Rest Al und Verunreinigungen einzeln maximal 0,05 % in Summe maximal 0,15 %. Der Massenverlust dieser äußeren Aluminium- bzw. Aluminiumlegierungsschichten ist kleiner als 15 mg/cm$^2$, so dass diese Aluminiumlegierungsschicht nicht anfällig für interkristalline Korrosion ist. Die Beschränkung der Gehalte von Mangan auf maximal 1,3 Gew.-%, von Eisen auf maximal 0,5 Gew.-% und von Silizium auf maximal 0,3 Gew.-% führt ebenfalls zur Vermeidung grober Ausscheidungen in dieser Schicht. Auch hier wirken sich grobe Ausscheidungen negativ auf die Umformeigenschaften, die dynamischen Festigkeiten aber auch auf den Schutz gegenüber interkristalliner Korrosion aus. Kupfer kann in der äußeren Aluminium- oder Aluminiumlegierungsschicht bis maximal 0,2 Gew.-% zulegiert werden, um die Festigkeit dieser Aluminium- oder Aluminiumlegierungsschicht zu verbessern, ohne die Korrosionsbeständigkeit zu verringern. Ferner kann die äußere Aluminium- oder Aluminiumlegierungsschicht bis zu 0,15 Gew.-% Chrom enthalten, um die Korrosionsbeständigkeit zu verbessern und gleichzeitig geringe Korngrößen zu erzielen, wobei grobe Phasen durch den erfindungsgemäßen Chrom-Gehalt vermieden werden. Eine gute Schweißbarkeit wird dadurch erreicht, dass der Zink-Gehalt maximal 0,25 Gew.-% beträgt. Darüber hinaus ergibt ein Titangehalt von maximal 0,2 Gew.-% eine verbesserte Kornfeinung. Vorzugsweise kann der Mn-Gehalt auf maximal 0,5 Gew.-% beschränkt werden, um eine weitere Verbesserung bezüglich des Umformverhaltens und der dynamischen Festigkeiten der äußeren Aluminium- oder Aluminiumlegierungsschicht zu erzielen. Der Mg-Gehalt kann vorzugsweise mindestens 0,5 Gew.-% betragen, um zusätzlich eine höhere Festigkeit in der mindestens einen äußeren Aluminiumlegierungsschicht zur Verfügung zu stellen. Mit der erfindungsgemäßen Verwendung des Aluminiumverbundwerkstoffs kann ein leichtes und stabiles Fahrwerkteil in Umgebungen mit über einen längeren Zeitraum erhöhten Temperaturen, beispielsweise im Temperaturbereich zwischen 70 °C und 180 °C, eingesetzt werden, ohne dass es zu Problemen hinsichtlich interkristalliner Korrosion kommt. Damit können Fahrwerkteile aus einem erfindungsgemäßen Aluminiumverbundwerkstoff vor allem in Fahrzeugen, Schienenfahrzeugen, Flugzeugen und Schiffen eingesetzt werden, welche Anwendungsbereiche mit erhöhten Temperaturanforderungen über längere Zeiträume umfassen.

Die Beständigkeit des erfindungsgemäßen Aluminiumverbundwerkstoffs gegenüber interkristalliner Korrosion wird dadurch erreicht, dass die äußere Aluminiumlegierungsschicht den folgenden Magnesiumgehalt in Gewichtsprozent aufweist:

$$Mg \leq 1,1\ \%.$$

Die äußere Aluminiumlegierungsschicht mit einem maximalen Mg-Gehalt von 1,1 Gew.-% ist weniger anfällig für interkristalline Korrosion und schützt die Aluminiumkernlegierungsschicht noch besser. Der Mindestgehalt von 0,5 Gew.-% Magnesium stellt zusätzlich Festigkeiten im Bereich der äußeren Aluminiumlegierungsschicht bereit

Ausreichende Festigkeiten bei minimalem Gewicht werden bei einer weiteren Ausführungsform der erfindungsgemäßen Verwendung des Aluminiumverbundwerkstoffs für Fahrwerkteile dadurch erreicht, dass die Dicke des Aluminiumverbundwerkstoffs 0,5 mm bis 5 mm, vorzugsweise größer 2,5 mm bis 4,5 mm beträgt. Dicken von mehr als 2,5 mm bis 4,5 mm werden als optimal für Fahrwerkteile bezeichnet, um hohe dynamische und statische Lasten aufzunehmen.

Ist zwischen der oder den äußeren Aluminiumlegierungsschichten und der Aluminiumkernlegierungsschicht eine Zwischenschicht aus einer Aluminiumlegierung vorgesehen, welche einen geringeren Mg-Gehalt als die äußere Aluminiumlegierungsschicht aufweist, kann ein Herstellverfahren des Aluminiumverbundwerkstoffs, nämlich das Walzplattieren, prozesssicherer gestaltet werden.

Die Aluminiumkernlegierungsschicht des erfindungsgemäß verwendeten Aluminiumverbundwerkstoffs kann gemäß einer weiteren Ausführungsform gegenüber interkristalliner Korrosion dadurch besser geschützt werden, dass beidseitig eine äußere Aluminiumlegierungsschicht vorgesehen ist. Diese Ausführungsform des erfindungsgemäßen Aluminiumverbundwerkstoffs entspricht damit einem Sandwich von äußeren Aluminiumlegierungsschichten mit niedrigem Magnesiumgehalt und einer innen liegenden Aluminiumkernlegierungsschicht mit sehr hohem Magnesiumgehalt. Die äußeren Aluminiumlegierungsschichten können in ihren Legierungszusammensetzungen innerhalb der Spezifikation der ersten äußeren Aluminiumlegierungsschicht aber auch in ihren Schichtdikken unterschiedlich sein, um eine optimale Anpassung an das Einsatzgebiet des erfindungsgemäßen Aluminiumverbundwerkstoffs zu gewährleisten.

Gemäß einer weiteren Ausführungsform des erfindungsgemäß verwendeten Aluminiumverbundwerkstoffs ist zwischen der Aluminiumkernlegierungsschicht und der ein oder beidseitigen äußeren Aluminiumlegierungsschicht eine Zwischenschicht aus Aluminium oder einer Aluminiumlegierung vorgesehen, welche einen geringeren Mg-Gehalt als die äußere Aluminiumlegierungsschicht aufweist. Die Verwendung dieses mindestens fünflagigen Aluminiumverbundwerkstoffs ermöglicht eine verbesserte Herstellbarkeit bei gleichzeitiger Verbesserung des Korrosionsschutzes der Fahrwerkteile.

Vorzugsweise ist der erfindungsgemäß verwendete Aluminiumverbundwerkstoff durch Walzplattieren oder direktes Gießen hergestellt. Beim direkten Gießen werden die äußeren Aluminiumlegierungsschichten gleichzeitig mit der Aluminiumkernlegierungsschicht gegossen und anschließend zu einem Gießband gewalzt. Sowohl das Walzplattieren als auch das direkte Gießen stellen sehr wirtschaftliche Varianten der Herstellung des Aluminiumverbundwerkstoffes dar.

Betragen die Schichtdicken der äußeren Aluminiumlegierungsschichten 1 % bis 12 %, vorzugsweise 3 % bis 8 % der Gesamtdicke des Aluminiumverbundwerkstoffs, ist der Volumenanteil der Aluminiumkerngierungsschicht am Aluminiumverbundwerkstoff groß, so dass ein Fahrwerkteil mit höchsten Festigkeiten zur Verfügung gestellt werden kann. Gleichzeitig reichen die Schichtdicken der äußeren Aluminiumlegierungsschichten aus, den gewünschten Korrosionsschutz zu gewährleisten.

Vorzugsweise weist das Fahrwerkteil gemäß einer weiteren Ausführungsform eine Schweißnaht auf. Wie bereits ausgeführt, ist aufgrund des verwendeten Aluminiumverbundwerkstoffs ein eine Schweißnaht aufweisendes Fahrwerkteil unproblematisch in Bezug auf interkristalline Korrosion, so dass Schweißnähte aufweisende Fahrwerkteile auch in die Korrosion fördernden Bereichen des Fahrzeugs Verwendung finden können. Denkbar ist aber auch der Einsatz anderer Fügeverfahren bei der Verwendung des Aluminiumverbundwerkstoffs für Fahrwerkteile.

Vorzugsweise wird der Aluminiumverbundwerkstoff für Fahrwerkteile verwendet, welche zumindest Bestandteil einer Radaufhängung, einer Federung, eines Stoßdämpfers und/oder einer Betriebsbremse eines Fahrzeugs sind. Beispielhafte Anwendungen für die Radaufhängung sind Achsbauteile, Achsrahmen und Achsschemel von Verbund-, Mehrlenkerachsen oder Federlenker. Insbesondere in den genannten Fahrwerkbereichen kann durch den Einsatz des Aluminiumverbundwerkstoffs eine wesentliche Gewichtsersparnis durch Verringerung der Wandstärken des eingesetzten Aluminiumverbundwerkstoffs bei hohem Korrosionsschutz gegenüber bisher verwendeten Aluminiumlegierungen erzielt werden.

Gemäß einer zweiten Lehre der vorliegenden Erfindung wird die oben aufgezeigt Aufgabe für ein Verfahren zur Herstellung eines Aluminiumverbundwerkstoffs mit mindestens einer äußeren Aluminiumlegierungsschicht und einer Aluminiumkernlegierungsschicht dadurch gelöst, dass bei dem Verfahren ein Kernbarren für die Aluminiumkernlegierungsschicht aus einer Aluminiumlegierung mit folgenden Legierungsbestandteilen in Gewichtsprozent

|       |   |    |        |
|-------|---|----|--------|
| 3,5 % | < | Mg | ≤ 7,0 %, |
|       |   | Mn | ≤ 1,0 %, |
|       |   | Fe | ≤ 0,5 %, |
|       |   | Si | ≤ 0,4 %, |
|       |   | Cu | ≤ 0,15 %, |
|       |   | Cr | ≤ 0,25 %, |
|       | Zn | ≤ | 0,25 %, |
|       | Ti | ≤ | 0,2 %, |

Rest Al und Verunreinigungen einzeln maximal 0,05 %, in Summe maximal 0,15 % bereitgestellt wird, und für die mindestens eine äußere Aluminiumlegierungsschicht ein Plattierwerkstoff aus einer Aluminiumlegierung verwendet wird, welcher bei einem Korrosionstest gemäß ASTmG67 maximal 15 mg/cm$^2$ Massenverlust hat, der Plattierwerkstoff auf den Kernbarren bestehend aus der Aluminiumkernlegierung zumindest einseitig aufgebaut wird und während des reversierenden Plattierwalzens des Kernbarrens mit aufgebautem Plattierwerkstoff in einer Walzrichtung mindestens ein Leerstich erfolgt.

Das Plattierwalzen ist ein Warmwalzschritt und soll zum Verschweißen des Kernbarrens und des Plattierwerkstoffs führen. Die hohe Temperatur des Plattierwerkstoffs und des Kernbarrens gewährleisten zusammen mit dem Walzdruck, dass der Kernbarren und der aufgebaute Plattierwerkstoff miteinander verschweißen, so dass eine mit der Aluminiumkernlegierungsschicht fest verbundene, äußere Aluminium- oder Aluminiumlegierungsschicht erzeugt wird. Bei dem erfindungsgemäßen Verfahren hat es sich jedoch herausgestellt, dass das Plattierwalzen, jeweils mit einem Leerstich erfolgen sollte, um ausreichend prozesssicher eine stabile metallische Verbindung zwischen Kernbarren und der äußeren Aluminium- oder Aluminiumlegierungsschicht herzustellen. Dies ist Folge der hohen Festigkeit des Kernbarrens aufgrund dessen hohen Magnesiumgehaltes. Beim Leerstich erfolgt in eine Richtung während des reversierenden Walzvorgangs keine Dickenabnahme des zu walzenden Werkstoffs. Durch diese Maßnahme wird der Verbund aus äußerer Aluminiumlegierungsschicht und Aluminiumkernlegierungsschicht nicht mechanisch belastet, bevor beide Schichten miteinander verschweißt sind. Es kann somit eine prozesssichere Herstellung eines Aluminiumverbundwerkstoffs mit einer Aluminiumkernlegierungsschicht mit sehr hohem MagnesiumGehalt und mindestens einer äußeren Aluminiumlegierungsschicht ermöglicht werden.

Bevorzugt weist der Plattierwerkstoff für die äußeren Aluminiumlegierungsschichten die folgenden Legierungskomponenten in Gewichtsprozent auf:

$0,5 \leq Mg \leq 1,10 \%$,
$Mn \leq 0,5 \%$,
$Fe \leq 0,5 \%$,
$Si \leq 0,3 \%$,
$Cu \leq 0,2 \%$,
$Cr \leq 0,15 \%$,
$Zn \leq 0,25 \%$,
$Ti \leq 0,2 \%$,

Rest Al und Verunreinigungen einzeln maximal 0,05 % in Summe maximal 0,15 %. Dieser Plattierwerkstoff stellt nicht nur einen ausreichenden Korrosionsschutz bereit, sondern ist unter Berücksichtigung des erfindungsgemäßen Verfahrens unproblematisch in der Herstellung. Wie bereits ausgeführt, kann der Magnesiumgehalt zur Steigerung der Festigkeit auch mindestens 0,5 Gew.-% betragen.

Vorzugsweise wird während des reversierenden Plattierwalzens zumindest solange ein Leerstich durchgeführt, bis der Plattierwerkstoff mit der Aluminiumkernlegierungsschicht fest verschweißt ist. Sind beide Schichten miteinander verschweißt, verhält sich der Aluminiumverbundwerkstoff beim Warmwalzen wie ein konventionelles, einschichtiges Warmband und kann dann vollständig reversierend, d.h. ohne Leerstich, warmgewalzt werden.

Der Plattierwerkstoff kann einerseits durch Warmwalzen eines Barrens aus einer Aluminiumlegierung mit einer Legierungszusammensetzung der äußeren Aluminiumlegierungsschicht hergestellt werden. Es besteht aber auch die Möglichkeit den Plattierwerkstoff durch Abtrennen unter Verwendung von Sägen von einem Barren aus einem Plattierwerkstoff herzustellen. Hierdurch wird der Schritt des Warmwalzens zur Herstellung des auf den Kernbarren aufzubauenden Plattierwerkstoffs eingespart. Üblicherweise ist dann zusätzlich eine Oberflächenbearbeitung des Plattierwerkstoffs und eventuell des Kernbarrens, beispielsweise durch Fräsen und anschließendes Bürsten oder dergleichen notwendig, bevor der Plattierwerkstoff aufplattiert werden kann.

Eine Steigerung der Prozesssicherheit während des reversierenden Plattierwalzens wird dadurch erreicht, dass der blechförmige Plattierwerkstoff über eine Schweißnaht an der kurzen Kernbarrenseite mit dem Kernbarren verschweißt ist. Es hat sich gezeigt, dass die bisher verwendete punktförmige Schweißverbindung zwischen dem Kernbarren und dem blechförmigen Plattierwerkstoff nicht ausreicht. Allerdings kann auch eine Vielzahl an Schweißpunkten, welche im dichten Abstand gesetzt werden, die gleiche Wirkung wie eine Schweißnaht an der kurzen Kernbarrenseite erzielen.

Wird gemäß einer weiteren Ausführungsform des erfindungsgemäßen Verfahrens eine Zwischenschicht zwischen der oder den äußeren Aluminiumlegierungsschichten und der Aluminiumkernlegierungsschicht walzplattiert, wobei die Zwischenschicht einen geringeren Mg-Gehalt als die äußeren Aluminiumlegierungsschichten aufweist, kann das Verschweißen der äußeren Aluminiumlegierungsschichten beim Walzplattieren erleichtert werden. Vor allem die auf der Aluminiumkernlegierungsschicht vorhandene Magnesiumoxidschicht wird beim Vorhanden sein dieser Magnesium armen Zwischenschicht beim Walzplattieren leichter aufgerissen, so dass ein guter Metall-Metallkontakt beim Walzplattieren bereitgestellt wird. Dieser ist notwendig für ein gutes Verschweißen der walzplattierten Schichten. Die Zwischenschicht besteht daher vorzugsweise aus einer 1xxx, 3xxx oder 8xxx Aluminiumlegierung. Beispielsweise wurden gute Ergebnisse mit einem Reinaluminium 99,5 als Zwischenschicht erzielt.

Der Aluminiumverbundwerkstoff kann schließlich auf eine Enddicke von 0,5 mm bis 5 mm, vorzugsweise auf mehr als 2,5 mm bis 4,5 mm endgewalzt werden, so dass der Aluminiumverbundwerkstoff die für das Fahrwerkteil spezifische Dicke aufweist.

Darüber hinaus hat sich gemäß einer weiteren Ausführungsform des erfindungsgemäßen Verfahrens gezeigt, dass es vorteilhaft ist, dass der Plattierwerkstoff zu Beginn des Plattierwalzens eine geringere Länge aufweist als der Kernbarren, wobei vorzugsweise die Längendifferenz 3 % bis 20 % der Gesamtlänge des Kernbarrens entspricht. Durch die Wahl der Längen des blechförmigen Plattierwerkstoffs wird erreicht, dass am Ende des Plattierwalzens ein bandförmiger Aluminiumverbundwerkstoff bereitgestellt werden kann, welcher einerseits mit hoher Prozesssicherheit gefertigt werden kann und andererseits über die gesamte Länge mindestens eine äußere Aluminiumlegierungsschicht und eine Aluminiumkernlegierungsschicht aufweist. Selbstverständlich kann unter Berücksichtigung dieser Längendifferenz auch ein dreischichtiger Aluminiumverbundwerkstoff hergestellt werden, welcher über die gesamte Bandlänge den drei- bzw. fünfschichtigen Aufbau aufweist.

Besonders einfach kann ein mindestens dreischichtig aufgebauter Aluminiumverbundwerkstoff dadurch zur Verfügung gestellt werden, dass als Plattierwerkstoff selbst ein Verbundwerkstoff aufplattiert wird, wobei der Plattierwerkstoff gleichzeitig zumindest eine Zwischenschicht und eine äußere Aluminiumlegierungsschicht bereitstellt.

Vor dem Plattierwalzen wird der Kernbarren vorzugsweise homogenisiert. Die Homogenisierung kann ein oder mehrstufig erfolgen, wobei üblicherweise die Temperaturen 390 °C bis 550 °C betragen. Gute Ergebnisse beim Homogenisieren wurden erzielt, wenn der Kernbarren für eine Dauer von mindestens 0,5 h auf dieser Temperatur gehalten wurde. Die Oberfläche des Kernbarrens wird nach dem Homogenisieren mechanisch bearbeitet, um beispielsweise außen abgelagerte Magnesiumoxidschichten zu entfernen. Vor dem Plattierwalzen kann der Kernbarren, vorzugsweise mit aufgebautem Plattierwerkstoff auf Walztemperatur vorgewärmt werden. Durch Fräsen und Bürsten oder andere Oberflächenbearbeitungsverfahren kann beispielsweise die Oberfläche des Kernbarrens in einen optimalen Zustand zur Durchführung des Plattierwalzens gebracht werden.

Nach dem Plattierwalzen wird der bandförmige Aluminiumverbundwerkstoff gemäß einer weiteren Ausführungsform des erfindungsgemäßen Verfahrens mit oder ohne Zwischenglühung kaltgewalzt und abschließend einer Weichglühung unterzogen, so dass die Umformbarkeit des Aluminiumverbundwerkstoffs maximal ist. Die Weichglühung kann allerdings alternativ auch unmittelbar vor dem Umformvorgang erfolgen.

Alternativ zum Walzplattieren kann ein Aluminiumverbundwerkstoff zur Herstellung eines erfindungsgemäßen Fahrwerkteils auch durch ein Verfahren bereitgestellt werden, bei welchem der aus einer Aluminiumkernlegierung und mindestens einer äußeren Aluminiumlegierungsschicht bestehende Aluminiumverbundwerkstoff durch simultanes Gießen der Aluminiumlegierungsschichten des Aluminiumverbundwerkstoffs erfolgt, wobei die Aluminiumkernlegierungsschicht aus einer Aluminiumlegierung mit folgenden Legierungsbestandteilen in Gewichtsprozent:

$$3,5\ \% \quad < \quad Mg \quad \leq 7,0\ \%,$$
$$Mn \quad \leq 1,0\ \%,$$
$$Fe \quad \leq 0,5\ \%,$$
$$Si \quad \leq 0,4\ \%,$$
$$Cu \quad \leq 0,15\ \%,$$

(fortgesetzt)

$$Cr \quad \leq 0,25\ \%,$$
$$Zn \quad \leq 0,25\ \%,$$
$$Ti \quad \leq 0,2\ \%,$$

Rest Al und Verunreinigungen einzeln maximal 0,05 %, in Summe maximal 0,15 % und die mindestens eine äußere Aluminiumlegierungsschicht aus einer Aluminium- oder Aluminiumlegierungsschicht besteht, welche bei einem Korrosionstest gemäß ASTM G67 einen Massenverlust von maximal 15 mg/cm$^2$ aufweist und der Aluminiumverbundwerkstoff durch ein Warmwalzen und ein optionales Kaltwalzen auf Enddicke gewalzt wird. Das simultane Gießen stellt ein alternatives Herstellverfahren zum Walzplattieren dar und kann daher ebenso Aluminiumverbundwerkstoffe wirtschaftlich bereitstellen, welche für die Verwendung als Fahrwerkteile besonders optimiert wurden. Beim dem simultanen Gießen können selbstverständlich auch die zuvor genannten Zusammensetzungen der äußeren Aluminiumlegierungsschichten verwendet werden.

Es gibt nun eine Vielzahl von Möglichkeiten den erfindungsgemäßen Aluminiumverbundwerkstoff, dessen Verwendung oder das Verfahren zur Herstellung des erfindungsgemäßen Aluminiumverbundwerkstoffs weiterzubilden und auszugestalten. Hierzu wird verwiesen auf die den Patentansprüchen 1 und 9 nachgeordneten Patentansprüche sowie auf die Beschreibung von Ausführungsbeispielen in Verbindung mit der Zeichnung. Die Zeichnung zeigt in

Fig. 1          ein erstes Ausführungsbeispiel eines erfindungsgemäßen Aluminiumverbundwerkstoffs in einer schematischen Schnittansicht,

Fig. 2          in einer schematischen perspektivischen Ansicht einen Kernbarren mit aufgebautem Plattierwerkstoff vor dem Walzplattieren,

Fig. 3          ein zweites Ausführungsbeispiel eines erfindungsgemäßen Aluminiumverbundwerkstoffs in einer schematischen Schnittansicht,

Fig. 4a) und 4b)  ein Ausführungsbeispiel des erfindungsgemäßen Verfahrens zur Herstellung des Aluminiumverbundwerkstoffs und

Fig. 5          ein Ausführungsbeispiel eines erfindungsgemäßen Fahrwerkteils.

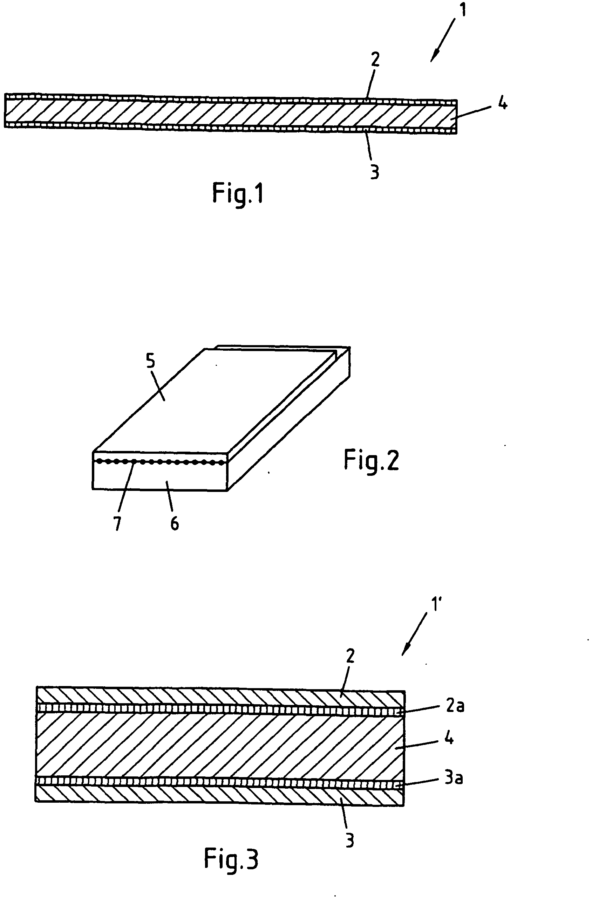

Fig. 1 zeigt zunächst in einer schematischen Schnittansicht ein Ausführungsbeispiel eines erfindungsgemäßen Aluminiumverbundwerkstoffs 1 mit zwei äußeren Aluminiumlegierungsschichten 2, 3 und einer Aluminiumkernlegierungsschicht 4. Die Aluminiumkernlegierungsschicht 4 hat folgenden Legierungsbestandteile in Gew.-%:

| | | | |
|---|---|---|---|
| 3,5 % | < | Mg | ≤ 7,0 %, |
| | | Mn | ≤ 1,0 %, |
| | | Fe | ≤ 0,5 %, |
| | | Si | ≤ 0,4 %, |
| | | Cu | ≤ 0,15 %, |
| | | Cr | ≤ 0,25 %, |
| | | Zn | ≤ 0,25 %, |
| | | Ti | ≤ 0,2 %, |

Rest Al und Verunreinigungen, einzeln maximal 0,05 %, in Summe maximal 0,15 %. Die äußeren Aluminiumlegierungsschichten 2, 3 weisen die folgenden Legeierungsbestandteile in Gewichtsprozent auf:

| | | | |
|---|---|---|---|
| 0,5 % | ≤ | Mg | ≤ 1,1 %, |
| | | Mn | ≤ 0,5 %, |
| | | Fe | ≤ 0,5 %, |
| | | Si | ≤ 0,3 %, |
| | | Cu | ≤ 0,2 %, |
| | | Cr | ≤ 0,15 %, |
| | | Zn | ≤ 0,25 %, |
| | | Ti | ≤ 0,2 %, |

Rest Aluminium und Verunreinigungen einzeln maximal 0,05 % in Summe maximal 0,15 % und sind daher beständig gegenüber interkristalliner Korrosion. Der verringerte Mn-Gehalt dieses Ausführungsbeispiels unterstützt die Vermeidung grober Ausscheidungen in der äußeren Aluminium- oder Aluminiumlegierungsschicht. Die Dicke des Aluminiumverbundwerkstoffs 1 beträgt mehr als 2,5 mm und maximal 4,5 mm. Diese Wanddicken ergeben für ein Fahrwerkteil eines Kraftfahrzeuges ein optimales Gewicht bei ausreichender Stabilität.

Die sehr hohen Festigkeiten des Aluminiumverbundwerkstoffs 1, welche durch die Aluminiumkernlegierungsschicht 4 bereitgestellt werden, werden aufgrund der hohen Korrosionsbeständigkeit auch in Anwendungsbereichen nutzbar, welche aufgrund der erhöhten Umgebungstemperaturen bisher nicht für derartige Aluminiumlegierungen nutzbar waren, beispielsweise für Fahrwerteile eines Kraftfahrzeugs, welche im Bereich des Motors oder der Abgasführung vorgesehen sind.

Die erhöhten Temperaturen führen nämlich bei ungeschützter Aluminiumkernlegierungsschicht 4 zu einer Sensibilisierung derselben für interkristalline Korrosion und im weiteren Verlauf zur Schädigung dieser Schicht durch interkristalline Korrosion. Die äußeren Aluminiumlegierungsschichten 2,3 sind dagegen nicht anfällig für interkristalline Korrosion und schützen die hochfeste Aluminiumkernlegierungsschicht 4.

Bei einem Korrosionstest wurde ein Blech aus einem Aluminiumverbundwerkstoff gemäß dem Ausführungsbeispiel aus Fig. 1 mit beidseitiger Plattierung und den oben genannten Zusammensetzungen zunächst einer Sensibilisierungsglühung bei 130 °c für 17 Stunden unterworfen und anschließend mit abgedeckten Kantenbereichen in konzentrierter Salpetersäure (relative Dichte 1,4134 bis 1,4218) bei einer Temperatur von 30°C für 24h entsprechend dem Verfahren gemäß der Norm ASTM G67 gelagert. Anschließend wurde der Massenverlust des Blechs gemessen. Dieser betrug 1,5 mg/cm$^2$ und zeigte damit die hohe Beständigkeit des Aluminiumverbundwerkstoffs gegenüber interkristalliner Korrosion und dessen besondere Eignung für Fahrwerkteile. Es ist davon auszugehen, dass ähnliche Resultate auch ein fünflagiger Verbundwerkstoff gemäß der vorliegenden Erfindung ergibt.

Der erfindungsgemäße Aluminiumverbundwerkstoff 1 kann alternativ auch durch Direktguss, d. h. durch simultanes Gießen der einzelnen Aluminiumlegierungsschichten, hergestellt werden. Beim Walzplattieren des Aluminiumverbundwerkstoffs wird zunächst, wie in Fig. 2 dargestellt, ein Plattierwerkstoff 5, welcher aus der Aluminiumlegierung der äußeren Aluminiumlegierungsschichten 2,3 besteht, auf einen Kernbarren 6 aus einer Aluminiumkernlegierung aufgebaut und vorzugsweise über eine durchgehende Schweißnaht 7 an der kurzen Kernbarrenseite mit diesem verschweißt. Die Schweißnaht 7 kann aber auch durch eng gesetzte Schweißpunkte hergestellt werden und eine ausreichende Befestigung des Plattierwerkstoffs 5 auf dem Kernbarren 6 ergeben.

Fig. 3 zeigt in einer vergrößerten schematischen Schnittansicht ein zweites Ausführungsbeispiel eines erfindungsgemäßen Aluminiumverbundwerkstoffs 1', welcher beidseitig mit einem zweischichtigen Plattierwerkstoff 2, 2a, 3, 3a plattiert ist. Die Zwischenschichten 2a und 3a bestehen aus einer Aluminiumlegierung vom Typ 1xxx, 3xxx oder 8xxx und weisen einen geringeren Mg-Gehalt als die äußeren Aluminiumlegierungsschichten 2,3 auf. Sie dienen dazu, um auf die sehr harte Aluminiumkernlegierungsschicht 4 die äußeren Aluminiumlegierungsschichten 2,3 besser aufplattieren zu können. Dadurch, dass die Mg-Gehalte der Zwischenschichten 2a, 3a sehr gering sind, vorzugsweise wird Reinaluminium 99,5 eingesetzt, sind deren Oberflächen nur in sehr geringem Maße mit Magnesiumoxid behaftet, so dass beim Plattierwalzen ein guter Metall-Metallkontakt zwischen den beteiligten Schichten bereitgestellt werden kann und eine schnellere Verschweißung der äußeren Aluminiumlegierungsschichten 2,3 mit der Aluminiumkernlegierungsschicht 4 bewirkt wird. Die Zwischenschichten können entweder durch Walzplattieren der äußeren Aluminiumlegierungsschichten 2,3 oder getrennt von diesen bereitgestellt werden. Die Zwischenschichtdicke beträgt beim fertig gewalzten Aluminiumverbundwerkstoff kleiner 100 μm. Beim simultanen Gießen des Aluminiumverbundwerkstoffs werden die Zwischenschichten in der Regel nicht verwendet.

Vor dem Zusammenbau des Kernbarrens 6 und des Plattierwerkstoffs 5 wird der Kernbarren 6 homogenisiert. Nachdem dem Homogenisieren wird die Oberfläche des Kernbarrens 6 durch Fräsen und anschließendes Bürsten auf den Plattiervorgang vorbereitet. Der Kernbarren 6 und der Plattierwerkstoff 5 werden anschließend auf Warmwalztemperatur vorgewärmt. Nach dem Aufbauen des Kernbarrens mit dem Plattierwerkstoff erfolgt ein reversierendes Plattierwalzen beider Werkstoffe.

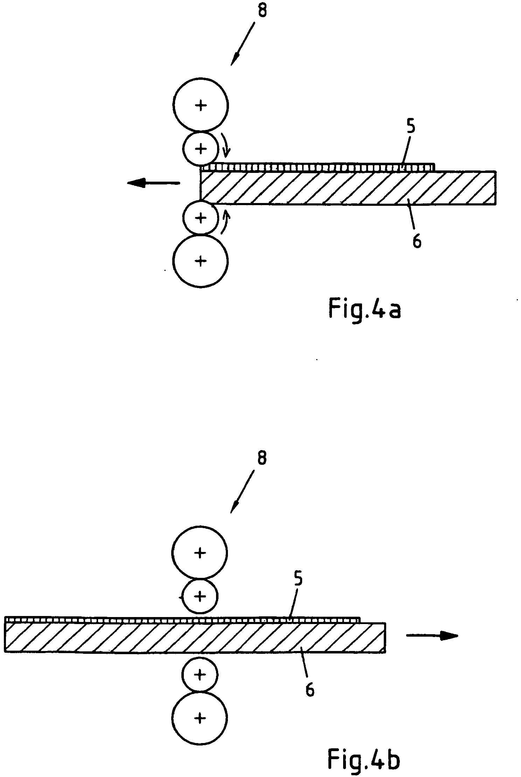

Das Warmwalzen bzw. Plattierwalzen ist in der Figur 4a) und 4b) schematisch dargestellt. Beim reversierenden Walzen wird in einer Richtung, wie in Figur 4a) dargestellt, unter Verwendung eines Warmwalzgerüstes 8 eine Dickenabnahme durchgeführt, wobei gleichzeitig der aufgelegte Plattierwerkstoff 5 mit dem Aluminiumkernlegierungsbarren 6 verschweißt. Bei der anschließenden reversierenden Bewegung des dickenverringerten Kernbarrens 6 mit aufgelegtem Plattierwerkstoff 5 erfolgt, wie in Figur 4b) dargestellt, in einer Walzrichtung keine Dickenabnahme, da der Walzspalt leicht geöffnet wird. Es folgt also in dieser Walzrichtung ein Leerstich. Während des Leerstichs wird keine Dickenabnahme des Walzgutes erzielt. Die noch nicht fest verschweißte äußere Aluminiumlegierungsschicht 2,3 soll auf diese Weise einer geringeren mechanischen Belastung ausgesetzt sein, so dass eine prozesssichere Durchführung des Walzplattierens gewährleistet wird.

Wie Figur 4a) und 4b) zeigen, weisen der aufgebaute Plattierwerkstoff 5 und der Kernbarren 6 nicht die gleiche Länge auf. Hierdurch wird berücksichtigt, dass während des Plattierwalzens aufgrund der hohen Härte des Kernbarrens 6 der Plattierwerkstoff 5 eine größere Streckung vollzieht, so dass das fertig plattiergewalzte Band aus Aluminiumverbundwerkstoff vorzugsweise eine durchgehende, äußere Aluminiumlegierungsschicht aus dem Plattierwerkstoff 5 aufweist. Die Längendifferenz zwischen Kernbarren und Plattierwerkstoff beträgt zwischen 3 % und 20 %.

Nach dem Plattierwalzen kann der bandförmige Aluminiumverbundwerkstoff 1 noch einem Kaltwalzen unterzogen werden, wobei das Kaltwalzen in den Figuren nicht dargestellt ist. Das Kaltwalzen kann mit oder ohne Zwischenglühung erfolgen. Vorteilhaft ist insbesondere, wenn eine Weichglühung vor dem Umformen des Aluminiumverbundwerkstoffs zum Bauteil erfolgt. Dies kann entweder am Band im Anschluss an das Kaltwalzen durchgeführt werden oder unmittelbar vor dem Umformvorgang am Blech oder Halbzeug.

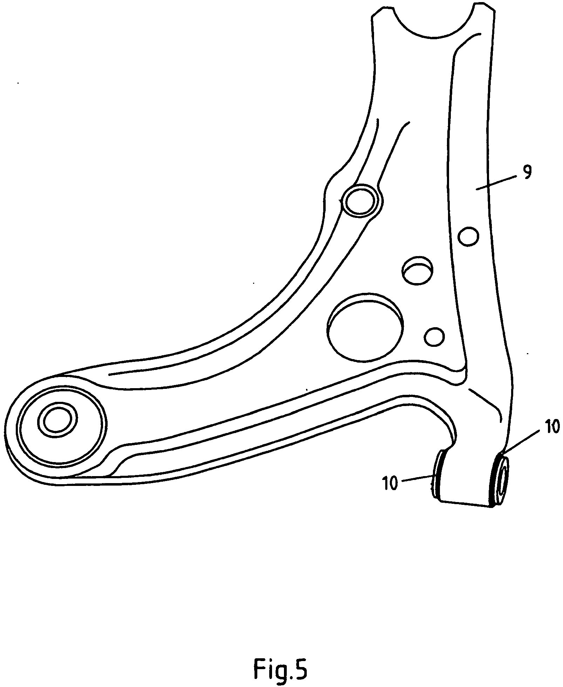

Im Ergebnis können Bauteile hergestellt werden, welche aufgrund des verwendeten Aluminiumverbundwerkstoffs 1 nicht nur in Umgebungen mit erhöhten Temperaturen, beispielsweise in Temperaturbereichen von 70 bis 180 °C, eingesetzt werden können, sie weisen auch eine besonders hohe Belastbarkeit auf. Ein erfindungsgemäßes Fahrwerkteil aus dem Aluminiumverbundwerkstoff ist in Figur 5 dargestellt. Figur 5 zeigt in einer schematischen Ansicht einen Federlenker 9 eines Kraftfahrzeuges, welcher aus einem mit dem erfindungsgemäßen Verfahren hergestellten Aluminiumverbundwerkstoff 1 besteht. Der Federlenker 9 kann aufgrund der hohen Festigkeit des Aluminiumverbundwerkstoffs 1 geringen Wanddicken und damit geringem Gewicht hergestellt werden, ohne dass es zu Problemen hinsichtlich der Festigkeitserfordernisse kommt. Gleichzeitig schützt der Aluminiumverbundwerkstoff vor interkristalliner Korrosion und ermöglicht auch das Verwenden von einer Schweißnaht 10 bei gleichzeitiger Beständigkeit gegenüber interkristalliner Korrosion. Verwendung kann der Aluminiumverbundwerkstoff daher vorzugsweise für Achsbauteile, Achsrahmen, Achsschemel aber auch Gelenkwellen finden. Achsbauteile können daher beispielsweise durch längsnahtgeschweißte, optional umgeformte Rohre oder tiefgezogene, verschweißte Bleche aus dem erfindungsgemäß verwendeten Aluminiumverbundwerkstoff bereitgestellt werden.

**Patentansprüche**

1. Verwendung eines Aluminiumverbundwerkstoffs für ein Fahrwerkteil eines Fahrzeugs, insbesondere eines Kraftfahrzeugs, wobei der Aluminiuntverbundwerkstoff eine Aluminiumkernlegierungsschicht (4) mit mindestens einer ein- oder beidseitigen, äußeren Aluminiumlegierungsschicht (2,3) aufweist, **dadurch gekennzeichnet, dass** die Aluminiumkernlegierungsschicht (4) die folgenden Legierungsbestandteile in Gewichtsprozent aufweist:

$$3,5\ \% < Mg \quad \leq 7,0\ \%,$$
$$Mn \quad \leq 1,0\ \%,$$
$$Fe \quad \leq 0,5\ \%,$$
$$Si \quad \leq 0,4\ \%,$$
$$Cu \quad \leq 0,15\ \%,$$
$$Cr \quad \leq 0,25\ \%,$$
$$Zn \quad \leq 0,25\ \%,$$
$$Ti \quad \leq 0,2\ \%,$$

Rest Al mit Verunreinigungen einzeln maximal 0,05 % in Summe maximal 0,15 % und beidseitig äußere Aluminiumlegierungsschichten (2,3) vorgesehen sind, welche die folgenden Legeierungsbestandteile in Gewichtsprozent aufweisen:

$$0,5\ \% \leq Mg \quad \leq 1,1\ \%,$$
$$Mn \quad \leq 0,5\ \%,$$
$$Fe \quad \leq 0,5\ \%,$$
$$Si \quad \leq 0,3\ \%,$$
$$Cu \quad \leq 0,2\ \%,$$
$$Cr \quad \leq 0,15\ \%,$$
$$Zn \quad \leq 0,25\ \%,$$

(fortgesetzt)

| | |
|---|---|
| Ti | ≤ 0,2 %, |

Rest A1 und Verunreinigungen einzeln maximal 0,05 %, in Summe maximal 0,15 %, wobei die Dicke des Aluminiumverbundwerkstoffs 2,5 mm bis 4,5 mm beträgt.

2. Verwendung eines Aluminiumverbundwerkstoffs nach Anspruch 1, **dadurch gekennzeichnet, dass** zwischen der oder den äußeren Aluminiumlegierungsschichten und der Aluminiumkernlegierungsschicht eine Zwischenschicht aus einer Aluminiumlegierung vorgesehen ist, welche einen geringeren Mg-Gehalt als die äußere Aluminiumlegierungsschicht aufweist.

3. Verwendung eines Aluminiumverbundwerkstoffs nach einem der Ansprüche 1 oder 2, **dadurch gekennzeichnet, dass** die Schichtdicken der äußeren Aluminiumlegierungsschichten (2,3) 1 % bis 12 %, vorzugsweise 3 % bis 8 % der Gesamtdicke des Aluminiumverbundwerkstoffs (1) betragen.

4. Verwendung eines Aluminiumverbundwerkstoffs nach einem der Ansprüche 1 bis 3, **dadurch gekennzeichnet, dass** der Aluminiumverbundwerkstoff durch Walzplattieren oder direktes Gießen hergestellt ist.

5. Verwendung eines Aluminiumverbundwerkstoffs nach einem der Ansprüche 1 bis 4, **dadurch gekennzeichnet, dass** das Fahrwerkteil zumindest ein Teil einer Radaufhängung, insbesondere ein Achsbauteil, ein Teil einer Federung, ein Teil eines Stoßdämpfers oder ein Teil der Betriebsbremsen eines Fahrzeugs ist.

6. Verfahren zur Herstellung eines Aluminiumverbundwerkstoffs für Fahrwerteile eines Fahrzeugs nach einem der Ansprüche 1 bis 5, wobei der Aluminiumverbundwerkstoff eine Aluminiumkernlegierungsschicht und mindestens eine beidseitige äußere Aluminiumlegierungsschicht aufweist, bei welchem ein Kernbarren für die Aluminiumkernlegierungsschicht aus einer Aluminiumlegierung mit folgenden Legierungsbestandteilen in Gewichtsprozent

| | |
|---|---|
| 3,5 % < Mg | ≤ 7,0 %, |
| Mn | ≤ 1,0 %, |
| Fe | ≤ 0,5 %, |
| Si | ≤ 0,4 %, |
| Cu | ≤ 0,15 %, |
| Cr | ≤ 0,25 %, |

(fortgesetzt)

| | |
|---|---|
| Zn | ≤ 0,25 %, |
| Ti | ≤ 0,2 %, |

Rest Al und Verunreinigungen einzeln maximal 0,05 %, in Summe maximal 0,15 % und beidseitig äußere Aluminiumlegierungsschichten (2,3) als Plattierwerkstoff vorgesehen sind, welche die folgenden Legeierungsbestandteile in Gewichtsprozent aufweisen:

| | |
|---|---|
| 0,5 % ≤ Mg | ≤ 1,1 %, |
| Mn | ≤ 0,5 %, |
| Fe | ≤ 0,5 %, |
| Si | ≤ 0,3 %, |
| Cu | ≤ 0,2 %, |
| Cr | ≤ 0,15 %, |
| Zn | ≤ 0,25 %, |
| Ti | ≤ 0,2 %, |

Rest A1 und Verunreinigungen einzeln maximal 0,05 %, in Summe maximal 0,15 %, der Plattierwerkstoff auf den Kernbarren bestehend aus der Aluminiumkernlegierung beidseitig aufgebaut wird, während des reversierenden Plattierwalzens des Kernbarrens mit aufgebautem Plattierwerkstoff in einer Walzrichtung mindestens ein Leerstich erfolgt und der Aluminiumverbundwerkstoff auf eine Enddicke von 2,5 mm bis 4,5 mm endgewalzt wird.

7. Verfahren nach Anspruch 6, **dadurch gekennzeichnet, dass** eine Zwischenschicht zwischen der oder den äußeren Aluminiumlegierungsschichten und der Aluminiumkernlegierungsschicht aufplattiert wird, wobei die Zwischenschicht einen geringeren Mg-Gehalt als die äußeren Aluminiumlegierungsschichten aufweist.

8. Verfahren nach einem der Ansprüche 7, **dadurch gekennzeichnet, dass** als Plattierwerkstoff selbst ein Verbundwerkstoff aufplattiert wird, wobei der Plattierwerkstoff gleichzeitig zumindest eine Zwischenschicht und eine äußere Aluminiumlegierungsschicht bereitstellt.

9. Verfahren zur Herstellung eines Aluminiumverbundwerkstoffs zur Verwendung für Fahrwerkteile eines Fahrzeugs nach einem der Ansprüche 1 bis 5, bei welchem der aus einer Aluminiumkernlegierung und mindestens einer äußeren Aluminiumlegierungsschicht bestehende Aluminiumverbundwerkstoff durch simultanes Gießen der Aluminiumlegierungsschichten des Aluminiumverbundwerkstoffs erfolgt, wobei die Aluminiumkernlegierungsschicht aus einer Aluminiumlegierung mit folgenden Legierungsbestandteilen in Gewichtsprozent:

$$
\begin{aligned}
3,5\ \% < Mg\quad &\leq 7,0\ \%, \\
Mn\quad &\leq 1,0\ \%, \\
Fe\quad &\leq 0,5\ \%, \\
Si\quad &\leq 0,4\ \%, \\
Cu\quad &\leq 0,15\ \%, \\
Cr\quad &\leq 0,25\ \%, \\
Zn\quad &\leq 0,25\ \%, \\
Ti\quad &\leq 0,2\ \%,
\end{aligned}
$$

Rest A1 und Verunreinigungen einzeln maximal 0,05 %, in Summe maximal 0,15 % und beidseitig äußere Aluminiumlegierungsschichten (2,3) vorgesehen sind, welche die folgenden Legeierungsbestandteile in Gewichtsprozent aufweisen:

$$
\begin{aligned}
0,5\ \% \leq Mg\quad &\leq 1,1\ \%, \\
Mn\quad &\leq 0,5\ \%, \\
Fe\quad &\leq 0,5\ \%, \\
Si\quad &\leq 0,3\ \%, \\
Cu\quad &\leq 0,2\ \%, \\
Cr\quad &\leq 0,15\ \%, \\
Zn\quad &\leq 0,25\ \%, \\
Ti\quad &\leq 0,2\ \%,
\end{aligned}
$$

Rest Al und Verunreinigungen einzeln maximal 0,05 %, in Summe maximal 0,15 %, wobei der Aluminiumverbundwerkstoff der Aluminiumverbundwerkstoff durch ein Warmwalzen und ein optionales Kaltwalzen auf eine Enddicke von 2,5 mm bis 4,5 mm gewalzt wird.

## Claims

1. Use of an aluminium composite material for a chassis part of a vehicle, in particular of a motor vehicle, the aluminium composite material comprising an aluminium core alloy layer (4) having at least one outer aluminium alloy layer (2, 3) on one or both sides, **characterised in that** the aluminium core alloy layer (4) comprises the following alloy constituents in % by weight:

$$
\begin{aligned}
3.5\ \% < Mg\quad &\leq 7.0\ \%, \\
Mn\quad &\leq 1.0\ \%, \\
Fe\quad &\leq 0.5\ \%, \\
Si\quad &\leq 0.4\ \%, \\
Cu\quad &\leq 0.15\ \%, \\
Cr\quad &\leq 0.25\ \%, \\
Zn\quad &\leq 0.25\ \%, \\
Ti\quad &\leq 0.2\ \%,
\end{aligned}
$$

the rest being formed by Al containing impurities of 0.05 % at most in each case and with a maximum total of 0.15 %, and outer aluminium alloy layers (2, 3) are provided on both sides and comprise the following alloy constituents in % by weight:

$$
\begin{aligned}
0.5\ \% \leq Mg\quad &\leq 1.1\ \%, \\
Mn\quad &\leq 0.5\ \%, \\
Fe\quad &\leq 0.5\ \%, \\
Si\quad &\leq 0.3\ \%, \\
Cu\quad &\leq 0.2\ \%, \\
Cr\quad &\leq 0.15\ \%, \\
Zn\quad &\leq 0.25\ \%, \\
Ti\quad &\leq 0.2\ \%,
\end{aligned}
$$

the rest being formed by Al and impurities of 0.05 % at most in each case and with a maximum total of 0.15 %, the thickness of the aluminium composite material being 2.5 mm to 4.5 mm.

2. The use of an aluminium composite material according to claim 1, **characterised in that** an intermediate layer formed of an aluminium alloy is provided between the outer aluminium alloy layer or layers and the aluminium core alloy layer and has a lower Mg content than the outer aluminium alloy layer.

3. The use of an aluminium composite material according to one of claims 1 or 2, **characterised in that** the layer thicknesses of the outer aluminium alloy layers (2, 3) are 1 % to 12 %, preferably 3 % to 8 %, of the total thickness of the aluminium composite material (1).

4. The use of an aluminium composite material according to one of claims 1 to 3, **characterised in that** the aluminium composite material is produced by roll-cladding or by direct casting.

5. The use of an aluminium composite material according to one of claims 1 to 4, **characterised in that** the chassis part is at least part of a wheel suspension, in particular an axle part, a part of a suspension system, a part of a shock absorber, or a part of the service brakes of a vehicle.

6. A method for producing an aluminium composite material for chassis parts of a vehicle according to one of claims 1 to 5, the aluminium composite material comprising an aluminium core alloy layer and at least one outer aluminium alloy layer on both sides, in which method a core ingot for the aluminium core alloy layer formed of an aluminium alloy containing the following alloy constituents in % by weight

$$
3.5\ \% < Mg\quad \leq 7.0\ \%,
$$

(continued)

| | |
|---|---|
| Mn | ≤ 1.0 %, |
| Fe | ≤ 0.5 %, |
| Si | ≤ 0.4 %, |
| Cu | ≤ 0.15 %, |
| Cr | ≤ 0.25 %, |
| Zn | ≤ 0.25 %, |
| Ti | ≤ 0.2 %, |

the rest being formed by Al and impurities of 0.05 % at most in each case and with a maximum total of 0.15 %, is provided and outer aluminium alloy layers (2, 3) are provided on both sides as cladding material and comprise the following alloy constituents in % by weight:

| | |
|---|---|
| 0.5 % ≤ Mg | ≤ 1.1 %, |
| Mn | ≤ 0.5 %, |
| Fe | ≤ 0.5 %, |
| Si | ≤ 0.3 %, |
| Cu | ≤ 0.2 %, |
| Cr | ≤ 0.15 %, |
| Zn | ≤ 0.25 %, |
| Ti | ≤ 0.2 %, |

the rest being formed by Al and impurities of 0.05 % at most in each case and with a maximum total of 0.15 %, the cladding material is formed on both sides of the core ingots consisting of the aluminium core alloy, at least one empty pass is carried out during the reverse clad rolling of the core ingot with formed cladding material in one rolling direction, and the aluminium composite material is rolled to an end thickness of 2.5 mm to 4.5 mm.

7. The method according to claim 6, **characterised in that** an intermediate layer is clad between the outer aluminium alloy layer or layers and the aluminium core alloy layer, the intermediate layer having a lower Mg content than the outer aluminium alloy layers.

8. The method according to claim 7, **characterised in that** a composite material is clad as a cladding material, the cladding material simultaneously providing at least one intermediate layer and one outer aluminium alloy layer.

9. A method for producing an aluminium composite material for use for chassis parts of a vehicle according to one of claims 1 to 5, in which method the aluminium composite material consisting of an aluminium core alloy and at least one outer aluminium alloy layer is produced by simultaneous casting of the aluminium alloy layers of the aluminium composite material, the aluminium core alloy layer being formed of an aluminium alloy containing the following alloy constituents in % by weight:

| | |
|---|---|
| 3.5 % < Mg | ≤ 7.0 %, |
| Mn | ≤ 1.0 %, |
| Fe | ≤ 0.5 %, |
| Si | ≤ 0.4 %, |
| Cu | ≤ 0.15 %, |
| Cr | ≤ 0.25 %, |
| Zn | ≤ 0.25 %, |
| Ti | ≤ 0.2 %, |

the rest being formed by Al and impurities of 0.05 % at most in each case and with a maximum total of 0.15 %, and outer aluminium alloy layers (2, 3) are provided on both sides and comprise the following alloy constituents in % by weight:

| | |
|---|---|
| 0.5 % ≤ Mg | ≤ 1. 10%, |
| Mn | ≤ 0.5 %, |
| Fe | ≤ 0.5 %, |
| Si | ≤ 0.3 %, |
| Cu | ≤ 0.2 %, |
| Cr | ≤ 0.15 %, |
| Zn | ≤ 0.25 %, |
| Ti | ≤ 0.2 %, |

the rest being formed by Al and impurities of 0.05 % at most in each case and with a maximum total of 0.15 %, the aluminium composite material being rolled by hot-rolling and optionally by cold-rolling to an end thickness of 2.5 mm to 4.5 mm.

**Revendications**

1. Utilisation d'un matériau composite d'aluminium pour une pièce de transmission du mouvement d'un véhicule, notamment d'un véhicule automobile, ledit matériau composite d'aluminium comportant une couche centrale en alliage d'aluminium (4), au moins une couche extérieure en alliage d'aluminium (2, 3) étant disposée sur un ou deux de ses côtés, **caractérisée en ce que** la couche centrale en alliage d'aluminium (4) comporte les composants d'alliage suivants, en pour cent en poids :

| | |
|---|---|
| 3,5 % < Mg | ≤ 7,0 %, |
| Mn | ≤ 1,0 %, |
| Fe | ≤ 0,5 %, |
| Si | ≤ 0,4 %, |
| Cu | ≤ 0, 15 %, |
| Cr | ≤ 0,25 %, |

(suite)

Zn  $\leq 0,25$ %,
Ti  $\leq 0,2$ %,

le reste étant de l'Al avec des impuretés dont chacune représente au maximum 0,05 %, leur somme représentant au maximum 0,15 %, et des couches extérieures en alliage d'aluminium (2, 3) sont prévues des deux côtés, lesquelles comportent les composants d'alliage suivants, en pour cent en poins :

$0,5$ % $\leq$ Mg  $\leq 1,1$ %,
Mn  $\leq 0,5$ %,
Fe  $\leq 0,5$ %,
Si  $\leq 0,3$ %,
Cu  $\leq 0,2$ %,
Cr  $\leq 0,15$ %,
Zn  $\leq 0,25$ %,
Ti  $\leq 0,2$ %,

le reste étant de l'Al et des impuretés dont chacune représente au maximum 0,05 %, leur somme étant au maximum de 0,15 %, l'épaisseur dudit matériau composite d'aluminium étant de 2,5 mm à 4,5 mm.

2. Utilisation d'un matériau composite d'aluminium selon la revendication 1,
**caractérisée en ce que**,
entre ladite ou lesdites couches extérieures en alliage d'aluminium et ladite couche centrale en alliage d'aluminium, une couche intermédiaire en alliage d'aluminium est prévue, laquelle présente une teneur en Mg inférieure par rapport à ladite couche extérieure en alliage d'aluminium.

3. Utilisation d'un matériau composite d'aluminium selon l'une des revendications 1 ou 2,
**caractérisée en ce que**
les épaisseurs de couche des couches extérieures en alliage d'aluminium (2, 3) représentent 1 % à 12 %, de préférence 3 % à 8 %, de l'épaisseur totale du matériau composite d'aluminium (1).

4. Utilisation d'un matériau composite d'aluminium selon l'une des revendications 1 à 3,
**caractérisée en ce que**
ledit matériau composite d'aluminium est fabriqué par placage par laminage ou par coulée directe.

5. Utilisation d'un matériau composite d'aluminium selon l'une des revendications 1 à 4,
**caractérisée en ce que**
ladite pièce de transmission du mouvement est au moins une pièce de la suspension de roue, notamment un composant de l'essieu, une pièce d'un dispositif de suspension, une pièce d'un amortisseur ou une pièce des freins sollicités durant de fonctionnement d'un véhicule.

6. Procédé de fabrication d'un matériau composite d'aluminium destiné à des pièces de transmission du mouvement d'un véhicule selon l'une des revendications 1 à 5, ledit matériau composite d'aluminium comportant une couche centrale en alliage d'aluminium et, des deux côtés, au moins une couche extérieures en alliage d'aluminium, dans lequel un lingot central est prévu pour ladite couche centrale en alliage d'aluminium, constitué d'un alliage d'aluminium avec les composants d'alliage suivants, en pour cent en poins :

$3,5$ % $<$ Mg  $\leq 7$, %,
Mn  $\leq 1,0$ %,
Fe  $\leq 0,5$ %,
Si  $\leq 0,4$ %,
Cu  $\leq 0, 15$ %,
Cr  $\leq 0,25$ %,
Zn  $\leq 0,25$ %,
Ti  $\leq 0,2$ %,

le reste étant de l'Al et des impuretés dont chacune représente au maximum 0,05 %, leur somme représentant au maximum 0,15 %, et des couches extérieures en alliage d'aluminium (2, 3) sont prévues des deux côtés en tant que matériau de placage, lesquelles comportent les composants d'alliage suivants, en pour cent en poins :

$0,5$ % $\leq$ Mg  $\leq 1$, %,
Mn  $\leq 0,5$ %,
Fe  $\leq 0,5$ %,
Si  $\leq 0,3$ %,
Cu  $\leq 0,2$ %,
Cr  $\leq 0,15$ %,
Zn  $\leq 0,25$ %,
Ti  $\leq 0,2$ %,

le reste étant de l'Al et des impuretés dont chacune représente au maximum 0,05 %, leur somme représentant au maximum 0,15 %, ledit matériau de placage est appliqué des deux côtés sur ledit lingot central constitué de l'alliage central d'aluminium, au moins une passe sans réduction d'épaisseur est réalisée dans un sens de laminage durant le placage par laminage avec inversion que subit ledit lingot central après application dudit matériau de placage, et ledit matériau composite d'aluminium est laminé de façon à ce qu'il atteigne une épaisseur finale de 2,5 mm à 4,5 mm.

**7.** Procédé selon la revendication 6, **caractérisé en ce que**, entre ladite ou lesdites couches extérieures en alliage d'aluminium et ladite couche centrale en alliage d'aluminium, une couche intermédiaire est appliquée par placage, ladite couche intermédiaire présentant une teneur en Mg inférieure par rapport auxdites couches extérieures en alliage d'aluminium.

**8.** Procédé selon l'une des revendications 7, **caractérisé en ce que** le matériau de placage que l'on applique par placage constitue lui-même un matériau composite, ledit matériau de placage fournissant en même temps au moins une couche intermédiaire et une couche extérieure en alliage d'aluminium.

**9.** Procédé de fabrication d'un matériau composite d'aluminium destiné à être utilisé pour des pièces de transmission du mouvement d'un véhicule selon l'une des revendications 1 à 5, dans lequel ledit matériau composite d'aluminium constitué d'un alliage central d'aluminium et d'au moins une couche extérieure en alliage d'aluminium est réalisé par coulée simultanée des couches en alliage d'aluminium dudit matériau composite d'aluminium, ladite couche centrale en alliage d'aluminium étant en un alliage d'aluminium avec les composants d'alliage suivants, en pour cent en poids :

$$3,5 \% < \text{Mg} \leq 7,\%,$$
$$\text{Mn} \leq 1, \%,$$
$$\text{Fe} \leq 0,5 \%,$$
$$\text{Si} \leq 0,4 \%,$$
$$\text{Cu} \leq 0,15 \%,$$
$$\text{Cr} \leq 0,25 \%,$$
$$\text{Zn} \leq 0,25 \%,$$
$$\text{Ti} \leq 0,2 \%,$$

le reste étant de l'Al et des impuretés dont chacune représente au maximum 0,05 %, leur somme représentant au maximum 0,15 %, et des couches extérieure en alliage d'aluminium (2, 3) sont prévues des deux côtés, lesquelles comportent les composants d'alliage suivants, en pour cent en poids :

$$0,5 \% \leq \text{Mg} \leq 1, \%,$$
$$\text{Mn} \leq 0,5 \%,$$
$$\text{Fe} \leq 0,5 \%,$$
$$\text{Si} \leq 0,3 \%,$$
$$\text{Cu} \leq 0,2 \%,$$
$$\text{Cr} \leq 0,15 \%,$$
$$\text{Zn} \leq 0,25 \%,$$
$$\text{Ti} \leq 0,2 \%,$$

le reste étant de l'Al et des impuretés dont chacune représente au maximum 0,05 %, leur somme représentant au maximum 0,15 %, ledit matériau composite d'aluminium étant laminé par laminage à chaud et, optionnellement, par laminage à froid jusqu'à ce qu'il atteigne une épaisseur finale de 2,5 mm à 4,5 mm.

Fig.1

Fig.2

Fig.3

Fig.4a

Fig.4b

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19838017 A1
- EP 1852251 A1
- JP 6228691 A